(19) Europäisches Patentamt
European Patent Office
Office européen des brevets

(11) **EP 1 875 577 B1**

(12) **EUROPEAN PATENT SPECIFICATION**

(45) Date of publication and mention
of the grant of the patent:
**01.04.2009 Bulletin 2009/14**

(51) Int Cl.:
*H02G 15/013* (2006.01)   *C09K 3/10* (2006.01)
*H01B 3/30* (2006.01)   *C09J 191/00* (2006.01)
*C09J 123/00* (2006.01)

(21) Application number: **06750256.7**

(22) Date of filing: **13.04.2006**

(86) International application number:
**PCT/US2006/014169**

(87) International publication number:
**WO 2006/115849 (02.11.2006 Gazette 2006/44)**

(54) **SEALANT MATERIALS AND METHODS OF USING THEREOF**

DICHTMATERIALIEN UND VERFAHREN ZU IHRER VERWENDUNG

MATERIAUX D'ETANCHEITE ET LEURS PROCEDES D'UTILISATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.04.2005 US 117245**

(43) Date of publication of application:
**09.01.2008 Bulletin 2008/02**

(73) Proprietor: **3M Innovative Properties Company
St. Paul MN 55133-3427 (US)**

(72) Inventor: **DOWER, William V.
Saint Paul, Minnesota 55133-3427 (US)**

(74) Representative: **von Kreisler Selting Werner
Patentanwälte
P.O. Box 10 22 41
50462 Köln (DE)**

(56) References cited:
**EP-A- 0 529 957       GB-A- 2 074 389
US-A- 4 617 422       US-A- 4 639 483
US-A- 6 080 929**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to sealant materials for use in connection points. In particular, the present invention relates to sealant materials that exhibit varying rheological properties, and which are suitable for protecting communication cables and other connections against environmental conditions.

BACKGROUND OF THE INVENTION

Communication cables, such as electrical and optical cables, are used in a variety of environmental conditions. For example, communication cables may be placed in humid environments or buried underground. In such applications, the communication cable needs to withstand water penetration because water can severely affect the performance of the cable. For example, in an electrical cable, water may destroy the capacitance balance of the electrical conductor, short circuit the electrical cable, and induce high resistance due to corrosion. Similarly, in an optical cable, water may negatively affect the integrity of the optical cable. The effects of moisture are particularly problematic at connection points of communication cables (e.g., cable boxes and connectors), where the communication cables are generally more vulnerable to moisture exposure.

One solution to minimize water penetration at a connection point involves encasing the communication cables at the connection point, and surrounding the connection point with a water insoluble material, such as a grease. The grease generally seals the connection point and stops the migration of water. However, conventional greases typically used with communication cables are expensive and time consuming to manufacture, and are difficult and messy to use. As such, there exists a need for a material that is easy to manufacture and is easy to use with connection points of communication cables.

BRIEF SUMMARY OF THE INVENTION

The present invention is a method of using a sealant material. The method includes providing the sealant material, where the sealant material includes mineral oil, petroleum wax, and a viscosity builder, and where the sealant material exhibits a first hardness. The viscosity builder is selected from a group consisting of polybutene, a styrene-rubber diblock copolymer, an ethylene-propylene oligomer, and combinations thereof. The method further includes applying a shear force to at least a first portion of the sealant material, where the first portion of the sealant material exhibits a second hardness after the shear force is applied, and where the first hardness is at least two times greater than the second hardness.

In one embodiment, the present invention is characterized as a method of using a sealant material, which includes heating the sealant material, where the sealant material includes mineral oil, petroleum wax, and a viscosity builder selected from a group consisting of polybutene, a styrene-rubber diblock copolymer, an ethylene-propylene oligomer, and combinations thereof. The method further includes introducing the sealant material into a container, allowing the sealant material to cool and exhibit a first hardness, and applying a shear force to at least a first portion of the sealant material, where the first portion of the sealant material exhibits a second hardness after being subjected to the shear force, and where the first hardness is at least two times greater than the second hardness.

In another embodiment, the present invention is characterized as a sealant material that includes mineral oil, polybutene, petroleum wax, and a block copolymer selected from a group consisting of a styrene-rubber diblock copolymer, a styrene-rubber-styrene triblock copolymer, and combinations thereof, where the sealant material exhibits a first hardness. The sealant material exhibits a second hardness after being subjected to a shear force, the first hardness being at least two times greater than the second hardness.

The above summary of the present invention is not intended to describe each disclosed embodiment or every implementation of the present invention. The figures and the detailed description that follow more particularly exemplify illustrative embodiments.

Unless otherwise explicitly stated, the following definition applies herein:

"Hardness" is measured pursuant to the Hardness Test, as discussed below in the Property Analysis and Characterization Procedures section.

References to a singular compound or composition includes both singular and plural forms. For example, the term "a block copolymer" refers to one or more block copolymers, and the term "an ethylene-propylene oligomer" refers to one or more ethylene-propylene oligomers.

BRIEF DESCRIPTION OF THE DRAWINGS

FIG. 1 is a perspective view of a sealant according to the present invention in use with a cable box and a pair of spliced cables.
FIG. 2A is a perspective view of a sealant according to the present invention in use with a dropwire connector.
FIG. 2B is a perspective view of a sealant according to the present invention in use with the dropwire connector.

While the above-identified drawings set forth one embodiment of the invention, other embodiments are also contemplated, as noted in the discussion. In all cases, this disclosure presents the invention by way of representation and not limitation. It should be understood that numerous other modifications and embodiments may be devised by those skilled in the art, which fall within the scope and spirit of the principles of the invention. The figures may not be drawn to scale. Like reference numbers have been used throughout the figures to denote like parts.

DETAILED DESCRIPTION

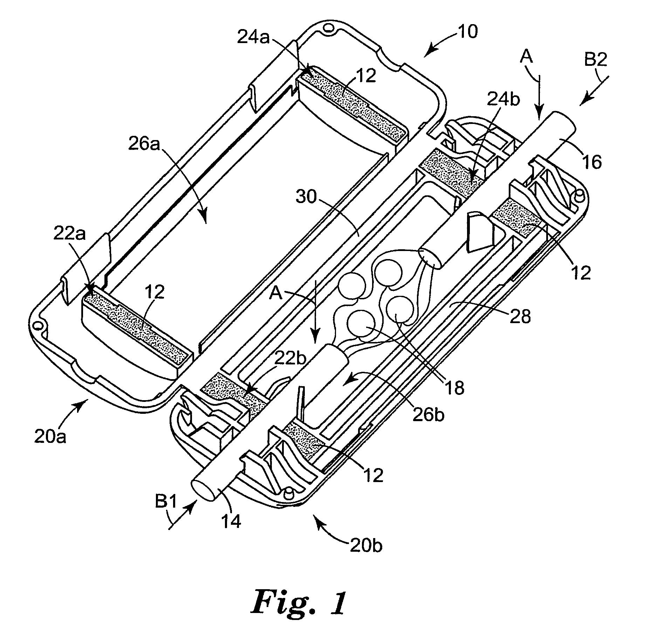

FIG. 1 is a perspective view of cable box 10 in use with sealant material 12 of the present invention Sealant material 12 is an environmental sealant that is initially in a wax-like state, and may be transformed to a grease-like state, in whole or in part, when subjected to a sufficient shear force. Cable box 10 is an example of a suitable enclosable container for use with sealant material 12, and is further shown in use with spliced cables 14 and 16, and discrete connectors 18. Cable box 10 includes cover members 20a and 20b, which are capable of being engaged against each other to enclose internal portions of cable box 10. Cover member 20a includes a pair of containment cavities 22a and 24a located at the distal ends of cover member 20a, and a main cavity 26a disposed between containment cavities 22a and 24a. Similarly, cover member 20b includes a pair of containment cavities 22b and 24b located at the distal ends of cover member 20b, a main cavity 26b disposed between containment cavities 22b and 24b, and lateral slots 28 and 30.

Spliced cables 14 and 16 extend through the distal ends of cover member 20b, and are connected with discrete connectors 18. Blocks of sealant material 12 are disposed in each of containment cavities 22a, 22b, 24a, and 24b. As such, when cover members 20a and 20b are closed together, sealant material 12 seals the ends of spliced cables 14 and 16 within cable box 10. This protects the connections between spliced cables 14 and 16 at discrete connectors 18 from external environmental conditions, such as moisture.

While shown in use with containment cavities 22a, 22b, 24a, and 24b of cable box 10 in FIG. 1, sealant material 12 may also be used in a wide variety of applications, such as electrical, opto-electrical (i.e., a combination of optical and electronic components), and optical applications. For example, sealant material 12 may also be disposed within discrete connectors 18, main cavities 26a and 26b, and lateral slots 28 and 30. This provides additional protection to spliced cables 14 and 16. Additional applications include a variety of cables, connectors (e.g., discrete connectors, modular connectors, connector boxes, and grease boxes), and closures (e.g., drop wire closures, filled closures, buried closures, and terminal blocks), automotive wire taps, and network interface devices. An example of a particularly suitable application includes an electrical connector disclosed in Farrar, Jr., U.S. Patent No. 3,897,129.

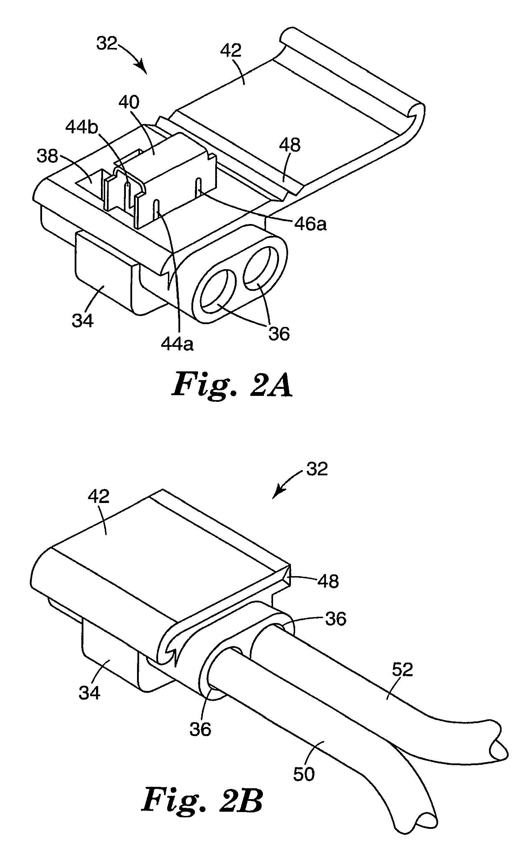

FIGS 2A and 2B are perspective views of dropwire connector 32 in use with sealant material 12 of the present invention (not shown in FIGS. 2A or 2B). Dropwire connector 32 is an example of a particularly suitable enclosable container for use with sealant material 12. As shown in FIG. 2A, dropwire connector 32 includes connector body 34, wire openings 36, body cavity 38, U-contact 40, and lid 42. Wire openings 36 and body cavity 38 extend within connector body 34, and are substantially filled with sealant material 12 in the wax-like state. U-contact is disposed in body cavity 38, and includes slits 44a and 44b and slits 46a and 46b (slit 46b not shown in FIG. 2A). Lid 42 connects to body cavity 38 via living hinge 48.

FIG. 2B shows dropwire connector 32 in use with wires 50 and 52. During use, wires 50 and 52 may be inserted in wire openings 36, such that the tips of wires 50 and 52 extend within body cavity 38. This allows sealant material 12 to extend around the tips of wires 50 and 52, and into wire openings 36. U-contact 40 may then be crimped (i.e., pressed down into body cavity 38), which causes wires 50 and 52 to be inserted through slits 44a and 44b and slits 46a and 46b, respectively. The crimping also strips portions of the insulating layers of wires 50 and 52, and creates an electrical contact between wires 50 and 52. Lid 42 may then be closed and secured against connector body 34, thereby enclosing body cavity 38. Sealant material 12 effectively plugs wire openings 36 and body cavity 38 from external environmental conditions, which protects the connection between wires 50 and 52 against moisture.

Enclosable containers used with communication cables, such as cable box 10 and dropwire connector 32, are typically transported with their covers open, as shown in FIGS. 1 and 2A, respectively. This allows the internal portions of the containers to be readily accessible by consumers. However, this presents an issue when conventional greases are used with the containers. During transportation of the containers, the conventional greases disposed within the containers may be displaced from their original positions. This reduces the amount of the conventional greases located at the original positions, which may correspondingly reduce the sealing effectiveness. Additionally, the conventional greases may end up in undesirable locations of the containers, requiring subsequent time and effort for removal and cleaning.

Sealant material 12, however, is initially in a wax-like state after being formed. The wax-like state generally refers to a rheology, structural integrity, and texture of wax. As such, while in the wax-like state, sealant material 12 does not substantially displace from its original position during transportation. However, when a sufficient amount of shear force is applied to a portion of sealant material 12, that portion of sealant material 12 then irreversibly transforms from the wax-like state to a grease-like state. The grease-like state refers to a rheology, structural integrity, and an adhesive and cohesive texture of grease (greases typically exhibit adhesive and cohesive properties). The term "irreversibly" refers to sealant material 12 being substantially incapable of reverting from the grease-like state back to the wax-like state so long as sealant material 12 remains substantially unmelted. Sealant material 12 may substantially regain the wax-like state if melted and resolidified.

The transformation of sealant material 12 from the wax-like state to the grease-like state differs from a solid material breaking apart into separate smaller particles. For example, when a conventional wax is subjected to a shear force, the wax cracks and splinters into separate pieces. In contrast, sealant material 12 remains as a single cohesive material with varying rheological properties (i.e., portions of sealant material 12 exhibit wax-like properties and other portions of sealant material 12 exhibit grease-like properties). The amounts of shear force required will vary based on the composition of sealant material 12. However, typical forces applied to sealant material 12 during transportation are generally not sufficient to transform sealant material 12 to the grease-like state.

The grease-like state of sealant material 12 allows sealant material 12 to provide a fit seal within a container, such as cable box 10 or dropwire connector 32. For example, when spliced cables 14 and 16 are pressed into the blocks of sealant material 12 at containment cavities 22b and 24b of cable box 10 (shown by arrows A in FIG. 1), the portions of sealant material 12 subjected to the compressive and shear forces are transformed from the wax-like state to the grease-like state. The adhesive properties of the grease-like state allow the compressed portions of sealant material 12 to adhere to spliced cables 14 and 16 within cable box 10, thereby forming an effective seal against external environmental conditions. In an alternative arrangement, spliced cables 14 and 16 may be twisted and pressed into the blocks of sealant material 12 at containment cavities 22b and 24b, as shown by arrows B1 and B2, respectively. This also creates shear forces that transform sealant material 12 from the wax-like state to the grease-like state.

Additionally, when cover members 20a and 20b are brought into contact with each other, the blocks of sealant material 12 located at adjacent containment cavities (i.e., containment cavities 22a and 22b, and containment cavities 24a and 24b ) press against each other, and are thereby compressed. As such, the blocks of sealant material 12 are subjected to sufficient compressive and shear forces to transform sealant materials 12 from the wax-like state to grease-like state. This further seals the interior portions of cable box 10 from external environmental conditions.

Dropwire connector 32 provides a similar situation to cable box 10. The entire volume of body cavity 38 is desirably filled with sealant material 12. As such, when U-contact 40 is crimped into body cavity 38, and when wires 50 and 52 are inserted through wire openings 36, the portions of sealant material 12 subjected to the compressive and shear forces are transformed from the wax-like state to the grease-like state. Similarly, when lid 42 is closed and secured against connector body 34, sealant material 12 is further compressed within body cavity 38. As such, sealant material 12 is subjected to further compressive and shear forces to transform sealant materials 12 from the wax-like state to grease-like state.

Sealant material 12 exhibits a first hardness when in the wax-like state (prior to being subjected to a sufficient shear force), and a second hardness when in the grease-like state (after being subjected to the sufficient shear force). As discussed above, the amount of shear force required to transform sealant material 12 from the wax-like state to the grease-like state will vary based on the composition of sealant material 12. Similarly, the first hardness and the second hardness will also depend on the composition of sealant material 12. However, a distinction between the wax-like state and the subsequent grease-like state of sealant material 12 may be identified by the ratio between the first hardness and the second hardness, as shown by the following formula:

$$Ratio = \frac{FirstHardness(Wax-LikeState)}{SecondHardness(Grease-LikeState)}$$

A suitable ratio of the first hardness of sealant material 12 in the wax-like state to the second hardness of sealant material 12 in the grease-like state is at least two (i.e., the first hardness is at least two times greater than the second hardness). A particularly suitable ratio of the first hardness of sealant material 12 in the wax-like state to the second hardness of sealant material 12 in the grease-like state is at least six (i.e., the first hardness is at least six times greater than the second hardness). A more particularly suitable ratio of the first hardness of sealant material 12 in the wax-like state to the second hardness of sealant material 12 in the grease-like state is at least ten (i.e., the first hardness is at least ten times greater than the second hardness). An even more particularly suitable ratio of the first hardness of sealant material 12 in the wax-like state to the second hardness of sealant material 12 in the grease-like state is at least fifty (i.e., the first hardness is at least fifty times greater than the second hardness). As defined above, the first hardness and the second hardness are measured pursuant to the Hardness Test, as discussed below in the Property Analysis and Characterization Procedures section.

Sealant material 12 of the present invention compositionally includes mineral oil, petroleum wax, and a viscosity builder, where the viscosity builder may include polybutene, a styrene-rubber diblock copolymer, an ethylene-propylene oligomer, and combinations thereof. Sealant material 12 is formed by heating the mineral oil to a processing temperature of about 120°C to about 160°C, and mixing the petroleum wax and the viscosity builder with the heated mineral oil.

After mixing, sealant material 12 may be introduced into a container for use as an environmental sealant to protect communication cables from external environmental conditions. For example, sealant material 12, while melted and flowable, may be injected into cable box 10 or dropwire connector 32. Once injected, sealant material 12 may be allowed to cool to an ambient temperature (e.g., 25°C). The cooling causes sealant material 12 to solidify to the wax-like state within the container.

While not wishing to be bound by theory, it believed the viscosity builder substantially prevents the petroleum wax from obtaining a uniform solid volume. For example, a diblock copolymer is essentially a plurality of spheres, where each sphere has a polystyrene core surrounded by rubber chains. As such, when sealant material 12 cools, the petroleum wax is believed to solidify in the interstitial spaces between the spheres of the diblock copolymer, thereby forming a wax matrix. The wax matrix provides the wax-like state for sealant material 12, where the wax-like state exists while the wax matrix remains substantially intact. However, when a sufficient shear force is applied to sealant material 12, the portion of the wax matrix that is subjected to the shear force irreversibly breaks apart. This allows the properties of the mineral oil and the viscosity builder (i.e., the diblock copolymer in this example) to become dominant. As such, the portion of sealant material 12 receiving the application of sufficient shear force is transformed from the wax-like state to the grease-like state.

Suitable mineral oils for use in sealant material 12 include petroleum distillate hydrocarbon oils, such as paraffinic mineral oils, naphthenic mineral oils, and combinations thereof. Naphthenic mineral oils contain naphthene groups (i.e., cycloparaffin) and are greater than 35% by weight naphthenic and less than 65% by weight paraffinic, according to ASTM D2501-00. Paraffinic mineral oils contain paraffin wax and exhibit greater oxidation resistance and lower volatility compared to naphthenic mineral oils. Examples of suitable commercially available mineral oils include trade designated "KAYDOL" White Mineral Oil and trade designated "SEMTOL 40" White Mineral Oil, both commercially available from Crompton Corporation, Middlebury, CT. A suitable minimum concentration of the mineral oil in sealant material 12 is about 50% by weight, based on the entire weight of sealant material 12. A suitable maximum concentration of the mineral oil in sealant material 12 is about 90% by weight, based on the entire weight of sealant material 12.

Suitable petroleum waxes for use in sealant material 12 include polyethylene waxes having melting points greater than about 90°C. Examples of suitable commercially available petroleum waxes for use in sealant material 12 include trade designated "PARAFLINT C105" and "PARAFLINT H1" Paraffin Waxes, which are commercially available from Moore & Munger, Inc., Shelton, CT. A suitable minimum concentration of the petroleum wax in sealant material 12 is about 3% by weight, based on the entire weight of sealant material 12. A suitable maximum concentration of the petroleum wax in sealant material 12 is about 20% by weight, based on the entire weight of sealant material 12.

Suitable polybutenes for use in the viscosity builder of sealant material 12 include polymers with the formula $[C_4H_8]_n$, and which have molecular weights ranging from about 1,000 to about 20,000. The polybutenes are generally long linear polymers that entangle with each other and with the diblock copolymer. As such, the polybutenes are suitable for increasing the adhesive and cohesive properties of sealant material 12 when sealant material 12 is in the grease-like state. A suitable minimum concentration of the polybutene in sealant material 12 is about 1% by weight, based on the entire weight of sealant material 12. A suitable maximum concentration of the polybutene in sealant material 12 is about 10% by weight, based on the entire weight of sealant material 12.

Suitable styrene-rubber diblock copolymers for use in the viscosity builder of sealant material 12 include styrene-isoprene, styrene-polybutadiene, styrene-ethylene/butylenes, styrene-ethylene/propylene, and combinations thereof. Examples of suitable commercially available diblock copolymers include trade designated "KRATON G-1701" and "KRATON G-1702" Block Copolymers, both of which are commercially available from Kraton Polymers, Houston, TX.; and "SEPTON S1020" Block Copolymer from Septon Company of America, Pasadena, TX. A suitable minimum concentration of the diblock copolymer in sealant material 12 is about 4% by weight, based on the entire weight of sealant material 12. A suitable maximum concentration of the diblock copolymer in sealant material 12 is about 15% by weight, based on the entire weight of sealant material 12.

The diblock copolymers and mineral oil used in the present invention have similar coefficients of thermal expansion. As such, sealant material 12 does not exhibit oil weeping when used at elevated temperatures. Many conventional greases use rheological-modifying agents and oils that have significantly different coefficients of thermal expansion. As such, when the conventional greases are heated in warm environments, the oil separates from the rheological-modifying agents (i.e., weeps). This results in an oily residue on the surface of the conventional grease that is undesirable.

Suitable ethylene-propylene oligomers for use in the viscosity builder of sealant material 12 include low molecular weight copolymers of ethylene and propylene. A suitable minimum concentration of the ethylene-propylene oligomer in sealant material 12 is about 1% by weight, based on the entire weight of sealant material 12. A suitable maximum concentration of the ethylene-propylene oligomer in sealant material 12 is about 10% by weight, based on the entire weight of sealant material 12.

Grease material 12 of the present invention may also include additional components, such as stabilizers, antioxidants, styrene-rubber-styrene triblock copolymers, processing aids, microspheres, and combinations thereof.

Suitable stabilizers and antioxidants include phenols, phosphites, phosphorites, thiosynergists, amines, benzoates, and combinations thereof. Suitable commercially available phenolic-based antioxidants include trade designated "IRGANOX 1035", "IRGANOX 1010", and "IRGANOX 1076" Antioxidants and Heat Stabilizers for wire and cable applications, commercially available from Ciba Specialty Chemicals Corp., Tarrytown, NY. A suitable maximum concentration of stabilizers or antioxidants in sealant material 12 is about 1% by weight, based on the entire weight of sealant material 12. When forming sealant material 12, stabilizers and antioxidants may be dissolved or dispersed in the mineral oil prior to combining the diblock copolymer with the mineral oil.

Suitable styrene-rubber-styrene triblock copolymers for use in sealant material 12 include styrene-butadiene-styrene (SBS), styrene-isoprene-styrene (SIS), styrene-ethylene/butylene-styrene (SEBS), styrene-ethylene/propylene-styrene (SEPS), and combinations thereof. Examples of commercially available suitable SEBS block copolymers for use in sealant material 12 include trade designated "KRATON G-1650" and "KRATON G-1652" Block Copolymers, both of which are commercially available from Kraton Polymers, Houston, TX. Additionally, suitable styrene-rubber-styrene triblock copolymers for use in sealant material 12 also include styrene-rubber-styrene triblock copolymers that are included as additives in some commercially available styrene-rubber diblock copolymers. A suitable maximum concentration of the styrene-rubber-styrene triblock copolymer in sealant material 12 is about 2% by weight, based on the entire weight of sealant material 12. The styrene-rubber-styrene triblock copolymer may be mixed with the mineral oil along with the diblock copolymer.

Suitable microspheres for use in sealant material 12 include functionalized and non-functionalized hollow glass and plastic microspheres. Suitable hollow glass microspheres have average particle sizes, by volume and at effective top size (95%), of about 10 micrometers to about 140 micrometers, and true densities of about 0.1 grams/cubic centimeter (g/cm$^3$) to about 0.4 g/cm$^3$. The term "true density" is a concentration of matter, as measured by weight per unit volume. Such hollow glass microspheres contain a large volume fraction of air (e.g., on the order of 90% to 95% air), and exhibit a dielectric constant of about 1.0. As such, hollow glass microspheres reduce the overall dielectric constant of sealant material 12. This allows sealant material 12 to exhibit a level of electrical insulation in addition to functioning as a moisture barrier.

Examples of suitable commercially available hollow glass microspheres for use in sealant material 12 include the S Series, K Series, and A Series of trade designated "3M SCOTCHLITE" Glass Bubbles commercially available from 3M Company, St. Paul, MN. Examples of particularly suitable 3M SCOTCHLITE Glass Bubbles include 3M SCOTCHLITE K1 Glass Bubbles (true density of 0.125 g/cm$^3$), 3M SCOTCHLITE K15 Glass Bubbles (true density of 0.15 g/cm$^3$), 3M SCOTCHLITE A16 Glass Bubbles (true density of 0.16 g/cm$^3$), 3M SCOTCHLITE K20 Glass Bubbles (true density of 0.20 g/cm$^3$), 3M SCOTCHLITE S22 Glass Bubbles (true density of 0.22 g/cm$^3$), and combinations thereof. A suitable maximum concentration of microspheres in sealant material 12 is about 20% by weight, based on the entire weight of sealant material 12. If the true density of the microspheres is significantly higher than the examples just discussed, then overall volume density of the microspheres based on the entire volume of the sealant material 12 may be an appropriate measure rather than weight density. A suitable volume loading would be up to about 50%. In either case, the loading of the microspheres is selected in accordance with the teachings herein to obtain desired properties of the sealant. When forming sealant material 12, the microspheres are desirably charged to the mixture after combining the diblock copolymer and the petroleum wax with the mineral oil.

Sealant material 12 is a beneficial environmental sealant that is easy to use, versatile, and inexpensive to manufacture. Sealant material 12 may be transported in the wax-like state in a container and subsequently compressed or sheared, and thereby transformed, in whole or in part, to the grease-like state. The portions of sealant material 12 that are in the grease-like state provide a sealed fit against environmental conditions for a variety of applications.

PROPERTY ANALYSIS AND CHARACTERIZATION PROCEDURES

Various analytical techniques are available for characterizing the sealant materials of the present invention. Several of the analytical techniques are employed herein. An explanation of these analytical techniques follows.

Hardness Test

Sealant materials of the present invention were quantitatively measured pursuant to the following procedure to determine the hardness and hardness ratios of the sealant materials when transforming from the wax-like state to the grease-like state. Each sealant material was placed in an oven maintained at 140°C. When the sealant material melted enough such that the viscosity would allow pouring, a portion of the sealant material was poured to a height of 25 millimeters into a metal ointment tin, which was 36 millimeters high and 50 millimeters in diameter. If the sealant material showed signs of separating into layers, the sealant material was stirred before pouring into the tin. The sealant material was then allowed to cool at 25°C for three hours to attain a wax-like state.

The hardness of the sealant material was tested at three different points in the tin, where each point was at least 1.3 centimeters away from another point and from the edge of the tin. The hardness testing was performed with a Texture Analyzer XT2, which is commercially available from Texture Technologies Corp., Scarsdale, NY. The Texture Analyzer included a 1/4-inch ball probe and a five kilogram load cell. The operating conditions included a contact force of 50.0 grams, test speeds of 0.1 millimeters/second, a trigger force of 0.5 grams, ambient temperature of 25°C, and atmospheric pressure. The recorded hardness was based on the shear force required to travel five millimeters from the surface of the sealant material. For each set of readings at the three different points, the results were averaged and recorded as the hardness of the sealant material in the wax-like state. Readings that exceeded 500 grams were reported as 500 grams due to the 500 gram limitation of the Texture Analyzer.

After the initial hardness testing was completed, a portion of the sealant material at each of the three points was then stirred with a wooden tongue depressor to transform the sealant material from the wax-like state to the grease-like state. Attention was paid to minimize the introduction of air bubbles and to provide a smooth, horizontal surface. The hardness of the sealant material was tested again at the three different points in the tin in the same manner discussed above. For each set of readings at the three different points, the results were averaged and recorded as the hardness of the sealant material in the grease-like state. The ratio of the hardness of a sealant material in the wax-like state versus the hardness of the sealant material in the grease-like state was obtained by dividing the hardness of the sealant material in the wax-like state by the hardness of the sealant material in the grease-like state.

EXAMPLES

The present invention is more particularly described in the following examples that are intended as illustrations only, since numerous modifications and variations within the scope of the present invention will be apparent to those skilled in the art. Unless otherwise noted, all parts, percentages, and ratios reported in the following examples are on a weight basis, and all reagents used in the examples were obtained, or are available, from the chemical suppliers described below, or may be synthesized by conventional techniques.

The following compositional abbreviations are used in the following Examples:

| | |
|---|---|
| "Semtol oil": | Mineral oil commercially available under the trade designation "SEMTOL 40" White Mineral Oil from Crompton Corporation, Middlebury, CT. |
| "Kaydol oil": | Mineral oil commercially available under the trade designation "KAYDOL" White Mineral Oil from Crompton Corporation, Middlebury, CT. |
| "S1020 DB": | A styrene-rubber diblock copolymer commercially available under the trade designation "SEPTON S1020" Block Copolymer from Septon Company of America, Pasadena, TX. |
| "G1701 DB": | A styrene-rubber diblock copolymer commercially available under the trade designation "KRATON G1701" Block Copolymer from Kraton Polymers, Houston, TX. |
| "G1702 DB": | A styrene-rubber diblock copolymer commercially available under the trade designation "KRATON G1702" Block Copolymer from Kraton Polymers, Houston, TX. |
| "S4077 TB": | A styrene-rubber-styrene triblock copolymer commercially available under the trade designation "SEPTON S4077" Block Copolymer from Septon Company of America, Pasadena, TX. |
| "G1650 TB": | A styrene-rubber-styrene triblock copolymer commercially available under the trade designation "KRATON G1650" Block Copolymer from Kraton Polymers, Houston, TX. |
| "G1651 TB": | A styrene-rubber-styrene triblock copolymer commercially available under the trade designation "KRATON G1651" Block Copolymer from Kraton Polymers, Houston, TX. |
| "G1652 TB": | A styrene-rubber-styrene triblock copolymer commercially available under the trade designation "KRATON G1652" Block Copolymer from Kraton Polymers, Houston, TX. |
| "H1500 PB": | Polybutene commercially available under the trade designation "INDOPOL H1500" from BP Petrochemicals, Houston, TX. |

(continued)

| | |
|---|---|
| "Paraflint H1": | A paraffin wax commercially available under the trade designation "PARAFLINT H1" wax from Moore & Munger, Inc., Shelton, CT. |
| "Paraflint C105": | A petroleum wax commercially available under the trade designation "PARAFLINT C105" wax from Moore & Munger, Inc., Shelton, CT. |
| "Microspheres": | Glass microspheres commercially available under the trade designation "3M SCOTCHLITE S22" Microspheres from 3M Company, St. Paul, MN. |
| "Irganox": | An antioxidant commercially available under the trade designation "IRGANOX 1010" Antioxidant from Ciba Specialty Chemicals Corp., Tarrytown, NY. |

Examples 1-19

Sealant materials of Examples 1-19 were prepared pursuant to the following procedure. Tables 1-3 provide the weight percent concentrations of the components for the sealant materials of Examples 1-19. For each sealant material, all of the ingredients, except microspheres (if any), were charged to a 16-ounce glass jar with metal foil lined metal lid. A stir bar was added to the jar, which was then sealed and placed in an oven maintained at 150°C for 30 minutes (sealant materials incorporating Semtol oil were placed in an oven maintained at a temperature of 130°C rather than 150°C).

After the 30-minute period, the jar was then moved to a stirring hot plate, where it was heated while stirring until the sealant material was substantially uniform and exhibited a low viscosity. The jar was then removed from the stirring hot plate, and microspheres, if used, were added and stirred into the sealant material with a glass stirring rod. The sealant materials were then cooled and examined for consistency.

TABLE 1

| Components | Example 1 | Example 2 | Example 3 | Example 4 | Example 5 | Example 6 | Example 7 |
|---|---|---|---|---|---|---|---|
| Semtol oil | 0.0 | 71.3 | 0.0 | 0.0 | 0.0 | 0.0 | 75.3 |
| Kaydol oil | 66.8 | 0.0 | 71.8 | 79.5 | 81.8 | 70.6 | 0.0 |
| S1020DB | 0.0 | 0.0 | 0.0 | 0.0 | 0.0 | 0.0 | 0.0 |
| G1701 DB | 0.0 | 0.0 | 0.0 | 0.0 | 0.0 | 0.0 | 0.0 |
| G 1702 DB | 5.0 | 5.6 | 0.0 | 5.1 | 8.0 | 4.0 | 0.0 |
| G1650TB | 0.0 | 4.0 | 0.0 | 0.0 | 0.0 | 0.0 | 0.0 |
| G1651 TB | 0.0 | 0.0 | 0.0 | 0.0 | 0.0 | 1.2 | 0.0 |
| G 1652 TB | 0.0 | 0.0 | 0.0 | 0.0 | 0.0 | 0.0 | 2.5 |
| S4077 TB | 0.0 | 0.1 | 0.0 | 0.0 | 0.0 | 0.0 | 0.0 |
| H1500 PB | 6.0 | 5.6 | 6.0 | 3.4 | 0.0 | 6.0 | 0.0 |
| Paraflint H1 | 0.0 | 0.0 | 0.0 | 0.0 | 0.0 | 0.0 | 0.0 |
| Paraflint C105 | 10.0 | 5.8 | 6.0 | 1.7 | 10.0 | 6.0 | 10.0 |
| Microspheres | 12.0 | 11.3 | 12.0 | 10.2 | 0.0 | 12.0 | 12.0 |
| Irganox | 0.2 | 0.2 | 0.2 | 0.2 | 0.2 | 0.2 | 0.2 |
| Total | 100.0 | 100.0 | 100.0 | 100.0 | 100.0 | 100.0 | 100.0 |

TABLE 2

| Components | Example 8 | Example 9 | Example 10 | Example 11 | Example 12 | Example 13 |
|---|---|---|---|---|---|---|
| Semtol oil | 0.0 | 0.0 | 0.0 | 0.0 | 0.0 | 0.0 |
| Kaydol oil | 68.3 | 67.3 | 76.9 | 69.3 | 76.9 | 78.0 |
| S1020 DB | 0.0 | 0.0 | 0.0 | 0.0 | 0.0 | 4.7 |

(continued)

| Components | Example 8 | Example 9 | Example 10 | Example 11 | Example 12 | Example 13 |
|---|---|---|---|---|---|---|
| G1701 DB | 0.0 | 0.0 | 0.0 | 0.0 | 4.9 | 0.0 |
| G1702 DB | 5.5 | 5.5 | 4.9 | 5.5 | 0.0 | 0.0 |
| G1650 TB | 0.0 | 0.0 | 0.0 | 0.0 | 0.0 | 0.0 |
| G1651 TB | 0.0 | 0.0 | 0.0 | 0.5 | 0.0 | 0.0 |
| G1652 TB | 0.0 | 0.0 | 0.0 | 0.0 | 0.0 | 0.0 |
| S4077 TB | 0.0 | 0.0 | 0.0 | 0.0 | 0.0 | 0.0 |
| H1500 PB | 6.0 | 6.0 | 3.3 | 5.9 | 3.3 | 3.1 |
| Paraflint H1 | 0.0 | 0.0 | 0.0 | 0.0 | 0.0 | 0.0 |
| Paraflint C105 | 8.0 | 9.0 | 4.9 | 6.8 | 4.9 | 4.7 |
| Microspheres | 12.0 | 12.0 | 9.8 | 11.7 | 9.8 | 9.4 |
| Irganox | 0.2 | 0.2 | 0.2 | 0.2 | 0.2 | 0.2 |
| Total | 100.0 | 100.0 | 100.0 | 100.0 | 100.0 | 100.0 |

TABLE 3

| Components | Example 14 | Example 15 | Example 16 | Example 17 | Example 18 | Example 19 |
|---|---|---|---|---|---|---|
| Semtol oil | 0.0 | 0.0 | 0.0 | 0.0 | 0.0 | 0.0 |
| Kaydol oil | 79.5 | 81.8 | 65.8 | 71.8 | 73.8 | 65.8 |
| S1020 DB | 0.0 | 0.0 | 0.0 | 0.0 | 0.0 | 0.0 |
| G1701 DB | 0.0 | 0.0 | 0.0 | 0.0 | 0.0 | 0.0 |
| G1702 DB | 5.1 | 0.0 | 0.0 | 0.0 | 0.0 | 0.0 |
| G1650 TB | 0.0 | 0.0 | 0.0 | 0.0 | 0.0 | 0.0 |
| G1651 TB | 0.0 | 0.0 | 0.0 | 0.0 | 0.0 | 0.0 |
| G1652 TB | 0.0 | 0.0 | 0.0 | 0.0 | 0.0 | 0.0 |
| S4077 TB | 0.0 | 0.0 | 0.0 | 0.0 | 0.0 | 0.0 |
| H1500 PB | 0.0 | 12.0 | 16.0 | 12.0 | 16.0 | 12.0 |
| Paraflint H1 | 5.1 | 0.0 | 0.0 | 0.0 | 0.0 | 0.0 |
| Paraflint C105 | 0.0 | 6.0 | 6.0 | 4.0 | 10.0 | 10.0 |
| Microspheres | 10.2 | 0.0 | 12.0 | 12.0 | 0.0 | 12.0 |
| Irganox | 0.2 | 0.2 | 0.2 | 0.2 | 0.2 | 0.2 |
| Total | 100.0 | 100.0 | 100.0 | 100.0 | 100.0 | 100.0 |

Hardness Testing for Examples 1-19

The sealant materials of Examples 1-19 were tested pursuant to the Hardness Test, discussed above. For each sealant material, Table 4 provides the hardness of the sealant material in the wax-like state, the hardness of the sealant material in the grease-like state, and the ratio of the hardness of the sealant material in the wax-like state to the hardness of the sealant material in the grease-like state.

TABLE 4

| Sample | Wax-like State Hardness (grams) | Grease-Like State Hardness (grams) | Ratio |
|---|---|---|---|
| Example 1 | 214.2 | 79.0 | 2.7 |
| Example 2 | 45.6 | 11.5 | 4.0 |
| Example 3 | 339.0 | 77.9 | 4.4 |
| Example 4 | 94.2 | 19.0 | 5.0 |
| Example 5 | 64.8 | 12.9 | 5.0 |
| Example 6 | 167.2 | 28.5 | 5.9 |
| Example 7 | 320.9 | 53.7 | 6.0 |
| Example 8 | 142.9 | 19.6 | 7.5 |
| Example 9 | 179.3 | 22.0 | 8.1 |
| Example 10 | 98.2 | 11.8 | 8.3 |
| Example 11 | 95.3 | 9.7 | 9.8 |
| Example 12 | 114.9 | 9.9 | 11.6 |
| Example 13 | 73.9 | 6.3 | 11.8 |
| Example 14 | 193.7 | 12.0 | 16.1 |
| Example 15 | 38.0 | 0.7 | 51.5 |
| Example 16 | 215.8 | 3.8 | 56.1 |
| Example 17 | 77.8 | 1.1 | 68.3 |
| Example 18 | 165.3 | 1.7 | 95.6 |
| Example 19 | 410.0 | 2.3 | 181.7 |

The data provided in Table 4 shows that the sealant materials of Examples 1-19 each exhibit a first hardness while in the wax-like state, and a second hardness after being subjected to a shear force, where the second hardness occurs in the grease-like state. The sealant materials of Examples 1-19 have hardnesses while in the wax-like state that range from about 2.5 times to about 180 times the hardnesses of the grease-like states. As such, the sealant materials of the present invention may be transported while in the wax-like state, and subsequently transformed into the grease-like state to function as environmental seals.

Although the present invention has been described with reference to preferred embodiments, workers skilled in the art will recognize that changes may be made in form and detail without departing from the spirit and scope of the invention. The sequence of steps in the claims is not limiting unless required to successfully carry out the invention. Furthermore, the present invention may be used at the connection point of any electrical or optical conductors or transmitters, including communication cables and other applications.

**Claims**

1. A method of using a sealant material, the method comprising:

   providing the sealant material, wherein the sealant material comprises mineral oil, petroleum wax, and a viscosity builder selected from a group consisting of polybutene, a styrene-rubber diblock copolymer, an ethylene-propylene oligomer, and combinations thereof, and wherein the sealant material exhibits a first hardness; and applying a shear force to at least a first portion of the sealant material, wherein the first portion of the sealant material exhibits a second hardness after the shear force is applied, and wherein the first hardness is at least two times greater than the second hardness,

2. A method of using a sealant material, the method comprising:

heating the sealant material, wherein the sealant material comprises mineral oil, petroleum wax, and a viscosity builder selected from a group consisting of polybutene, a styrene-rubber diblock copolymer, an ethylene-propylene oligomer, and combinations thereof,

introducing the sealant material into a container,

allowing the sealant maternal to cool and exhibit a first hardness; and

applying a shear force to at least a first portion of the sealant material located within the container, wherein the first portion of the sealant material exhibits a second hardness after being subjected to the shear force, and wherein the first hardness is at least two times greater than the second hardness.

3. The method according to any of the preceding claims, wherein the first hardness is at least ten times greater than the second hardness.

4. The method according to any of the preceding claims, wherein the styrene-rubbex diblock copolymer constitutes about 15% by weight or less of the sealant material, based on the entire weight of the sealant material.

5. The method according to any of the preceding claims, wherein the petroleum wax constitutes about 20% by weight or less of the sealant material, based on the entire weight of the sealant material.

6. The method according to any of the preceding claims, wherein the sealant material further comprises microspheres, and wherein the microspheres constitute about 50% by volume or less of the sealant material, based on the entire volume of the sealant material.

7. The method of claim 6, wherein the microspheres exhibit a true density ranging from about 0.1 grams/cubic centimeter to about 0.4 grams/cubic centimeter.

## Patentansprüche

1. Verfahren zur Verwendung eines Dichtungsmaterials, umfassend:

Bereitstellen des Dichtungsmaterials, wobei das Dichtungsmaterial Mineralöl, Petroleumwachs und einen Viskositätsbuilder aus der Gruppe bestehend aus Polybuten, einem Styrol-Kautschuk-Diblockcopolymer, einem Ethylen-Propylen-Oligomer und Kombinationen davon umfaßt und eine erste Härte aufweist; und

Anlegen einer Scherkraft an mindestens einen ersten Teil des Dichtungsmaterials, wobei der erste Teil des Dichtungsmaterials nach dem Anlegen der Scherkraft eine zweite Härte aufweist und die erste Härte mindestens zweimal so groß ist wie die zweite Härte.

2. Verfahren zur Verwendung eines Dichtungsmaterials, umfassend:

Erhitzen des Dichtungsmaterials, wobei das Dichtungsmaterial Mineralöl, Petroleumwachs und einen Viskositätsbuilder aus der Gruppe bestehend aus Polybuten, einem Styrol-Kautschuk-Diblockcopolymer, einem Ethylen-Propylen-Oligomer und Kombinationen davon umfaßt;

Eintragen des Dichtungsmaterials in einen Behälter;

Abkühlenlassen des Dichtungsmaterials, wobei das Dichtungsmaterial eine erste Härte aufweist; und

Anlegen einer Scherkraft an mindestens einen ersten Teil des Dichtungsmaterials in dem Behälter, wobei der erste Teil des Dichtungsmaterials nach dem Anlegen der Scherkraft eine zweite Härte aufweist und die erste Härte mindestens zweimal so groß ist wie die zweite Härte.

3. Verfahren nach einem der vorhergehenden Ansprüche, wobei die erste Härte mindestens zehnmal so groß ist wie die zweite Härte.

4. Verfahren nach einem der vorhergehenden Ansprüche, bei dem das Styrol-Kautschuk-Diblockcopolymer etwa 15 Gew.-% oder weniger des Dichtungsmaterials, bezogen auf das Gesamtgewicht des Dichtungsmaterials, ausmacht.

5. Verfahren nach einem der vorhergehenden Ansprüche, wobei das Petroleumwachs etwa 20 Gew.-% oder weniger des Dichtungsmaterials, bezogen auf das Gesamtgewicht des Dichtungsmaterials, ausmacht.

6. Verfahren nach einem der vorhergehenden Ansprüche, wobei das Dichtungsmaterial ferner Mikrokugeln umfaßt und die Mikrokugeln etwa 50 Vol.-% oder weniger des Dichtungsmaterials, bezogen auf das Gesamtvolumen des Dichtungsmaterials, ausmachen.

7. Verfahren nach Anspruch 6, wobei die Mikrokugeln eine wirkliche Dichte im Bereich von etwa 0,1 Gramm/Kubikzentimeter bis etwa 0,4 Gramm/Kubikzentimeter aufweisen.

**Revendications**

1. Procédé d'utilisation d'un matériau d'étanchéité, le procédé comprenant :

la fourniture du matériau d'étanchéité, le matériau d'étanchéité comprenant une huile minérale, une cire de pétrole, et un agent de viscosité sélectionné dans un groupe constitué du polybutène, d'un copolymère dibloc de styrène-caoutchouc, d'un oligomère d'éthylène-propylène, et de combinaisons de ceux-ci, et le matériau d'étanchéité présentant une première dureté ; et
l'application d'une force de cisaillement à au moins une première partie du matériau d'étanchéité, la première partie du matériau d'étanchéité présentant une deuxième dureté après l'application de la force de cisaillement, et la première dureté étant au moins deux fois supérieure à la deuxième dureté.

2. Procédé d'utilisation d'un matériau d'étanchéité, le procédé comprenant :

le chauffage du matériau d'étanchéité, le matériau d'étanchéité comprenant une huile minérale, une cire de pétrole, et un agent de viscosité sélectionné dans un groupe constitué du polybutène, d'un copolymère dibloc de styrène-caoutchouc, d'un oligomère d'éthylène-propylène, et de combinaisons de ceux-ci ;
l'introduction du matériau d'étanchéité dans un récipient ;
le fait de laisser le matériau d'étanchéité refroidir et présenter une première dureté ; et
l'application d'une force de cisaillement à au moins une première partie du matériau d'étanchéité situé dans le récipient, la première partie du matériau d'étanchéité présentant une deuxième dureté après avoir été soumise à la force de cisaillement, et la première dureté étant au moins deux fois supérieure à la deuxième dureté.

3. Procédé selon l'une quelconque des revendications précédentes, dans lequel la première dureté est au moins dix fois supérieure à la deuxième dureté.

4. Procédé selon l'une quelconque des revendications précédentes, dans lequel le copolymère dibloc de styrène-caoutchouc constitue environ 15 % en poids ou moins du matériau d'étanchéité, ce pourcentage étant exprimé relativement au poids total du matériau d'étanchéité.

5. Procédé selon l'une quelconque des revendications précédentes, dans lequel la cire de pétrole constitue environ 20 % en poids ou moins du matériau d'étanchéité, ce pourcentage étant exprimé relativement au poids total du matériau d'étanchéité.

6. Procédé selon l'une quelconque des revendications précédentes, dans lequel le matériau d'étanchéité comprend en outre des microsphères, et dans lequel les microsphères constituent environ 50 % en volume ou moins du matériau d'étanchéité, ce pourcentage étant exprimé relativement au volume total du matériau d'étanchéité.

7. Procédé selon la revendication 6, dans lequel les microsphères présentent une masse volumique réelle d'environ 0,1 gramme/centimètre cube à environ 0,4 gramme/centimètre cube.

*Fig. 1*

**Fig. 2A**

**Fig. 2B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3897129 A